# EUROPEAN PATENT APPLICATION

(11) **EP 0 836 193 A1**
(43) Date of publication of application: **15.04.1998**
(21) Application number: 97113450.7
(22) Date of filing: 05.08.1997
(51) Int. Cl.: G11B 33/04

(54) **A modular container for the storage of computer media**

(30) Priority: 10.10.1996 IT PN960039 U
(71) Applicant: Exponent Italia S.r.l., 33028 Tolmezzo (Udine) (IT)
(72) Inventor: D'Agaro, Amos, 33020 Rigolato, Udine (IT); Marino, Adriano, 28020 Piedimulera, Verbania (IT); Venturini, Andrea, 33013 Gemona del Friuli, Udine (IT)
(74) Representative: Agostini, Agostino

(57) **Abstract**

The invention relates to a modular container for the storage of computer media comprising a parallelepiped casing (1), having a face partially closable by a lid (10), which is tiltable and retractable in such a way to be substantially enclosed into the casing (1). Below the lid (10) the container is provided with a front panel (11) and the handle (15) of a drawer (12), the drawer having at least two alternate series (24,25) of means for holdin simultaneously different types of computer media. Various means, with captions written in alphanumeric and/or Braille characters, are provided for an easy identification of the computer media stored therein. Due to the modular structure of the casing (1), stable arrays (vertical and/or horizontal) of many containers can be arranged.

## Description

### TECHNICAL FIELD

The invention refers to a modular container intended for the storage of computer media having a substantially parallelepiped casing with a closure lid and at least a drawer. In this patent specification the naming "media" is to be intended under its broadest meaning in such a way to include any type of media that are presently used in the computer environment : compact disks (usually CD-ROM), 3.5" and 5.25" size diskettes, ZIP IOMEGA cassettes, TRAVAN cassettes, etc.

### BACKGROUND OF THE INVENTION

Nowadays, various and quite heterogeneous containers are used for the storage of computer media. In particular, the container disclosed in the European Patent Specification no. 0 300 134 is of a particular interest due to its modular construction : a plurality of such containers can be combined in a vertical and/or horizontal array and secured to one another by fasteners which are engageable into associated apertures provided on the outer surface of the containers. Furthermore, in the said container the lid is also the front surface of the drawer loaded with the media to be stored.

The above mentioned known container has several drawbacks. It is not suitable for storing all together media of different types, for example diskettes and cassettes; no means are provided to hold the media onto the drawer; additional parts, namely the already referred fasteners, are needed in order to make an array of combined containers physically stable.

Differentiated containers are also known for each type of media, such as cassette racks and the dedicated containers for compact disks, with or without jewel case, an example of the latter being disclosed in the copending Italian Patent Application serial no. PN95U000043, filed by the same Applicant on November 24, 1995. A drawback of those containers is their lack of flexibility due to the fact that they are specifically intended for just one type of media. As a consequence various types of container have to be available at a workstation for the storage of the different computer media.

### TARGETS OF THE INVENTION

The main target of the invention is to make possible the storage in the same container, all together, of any type of computer media, particularly the media commonly used in a workstation equipped with a personal computer with an advantageous saving of useful space and a tidier workplace.

A container as claimed here below enables to achieve the said target.

### BRIEF DESCRIPTION OF THE DRAWINGS

The following description will prove how the mentioned target can be achieved by a preferred, though not exclusive, embodiment of the invention depicted in the attached drawings where :
- Fig. 1 shows a perspective view of a container, the peculiarities of the lid being particularly highlighted;
- Fig. 2 is a partly broken view of the container to show some interior details,
- Fig. 3 shows in a lateral sight the container with a partially open drawer, the lid of the container being omitted for the sake of clarity;
- Fig. 4 shows a drawer of the container while supporting some compact disks.

### DESCRIPTION OF A PREFERRED EMBODIMENT

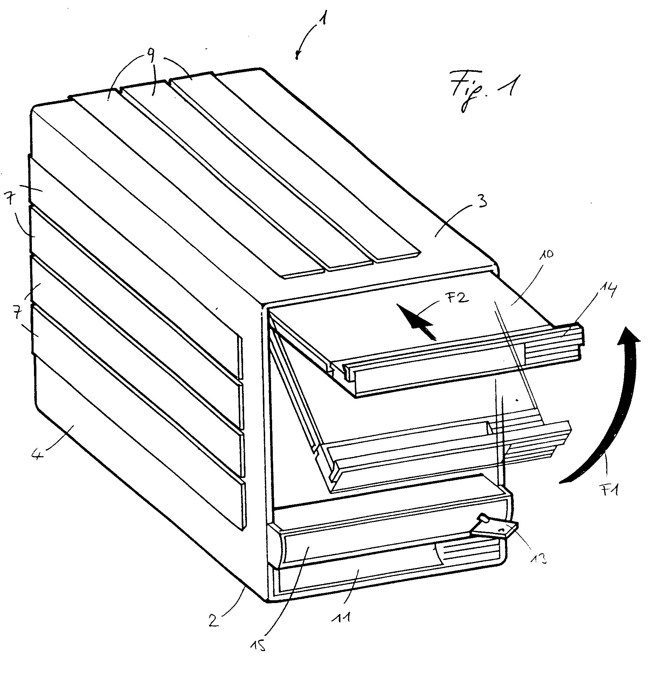

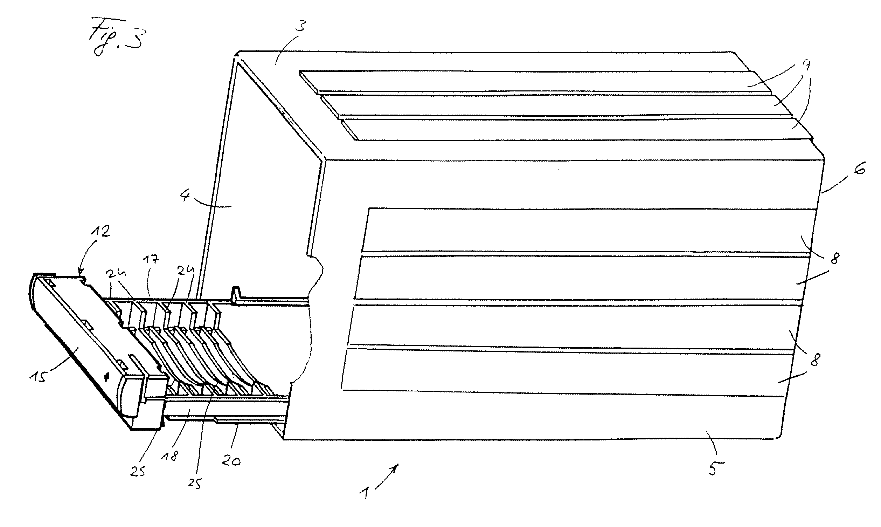

As shown in figs. 1 and 3, a modular container intended for the storage of computer media substantially is a casing 1, of a generally parallelepiped shape, having a lower and an upper face 2, respectively 3, a left hand and a right hand face, 4, respectively 5, and a rear face 6. The whole casing is preferably made as a single piece of injection moulded plastics.

In accordance with a feature of the invention, the outer surface of the left hand face 4 of the casing 1 is lengthwise provided with a number of ribs 7 which are extended, parallel to one another, up to the rear face 6 while the right hand face 5 is provided with a number of mating grooves 8 which are also extended, parallel to one another, up to the rear face 6. Thanks to the sliding of ribs 7 along grooves 8 of a nearby container, starting from their rear faces 6, several containers can be arranged one beside another in such a way to form a physically stable horizontal array. In a similar way, a number of parallel ribs 9 is lengthwise provided at the upper face 3 of the casing 1, and a number of mating grooves (not shown) is provided at the lower face 2 thereof, also extended up to the rear face 6. Thanks to the sliding of ribs 9 along the mating grooves of a nearby container, starting from their rear faces 6, several containers can be arranged one above another in such a way to form a physically stable horizontal array. The described features of the container are a full justification of the "modular" characteristics of the present invention.

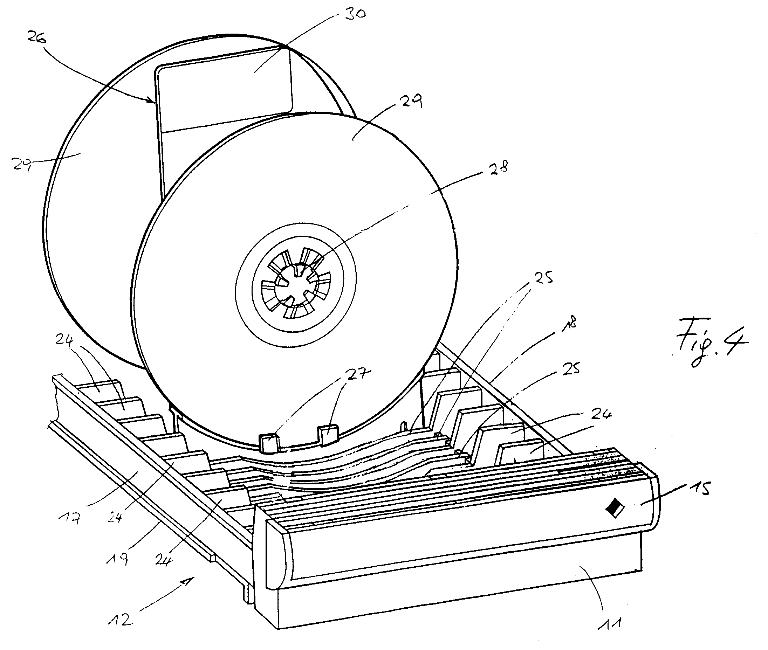

The front face of casing 1, parallel to the rear face 6, is closable with a lid 10 and the underlying front panel 11 of a separate drawer 12, which is slidably mounted on the inner surface of the lower face 2 of the same casing. A common latch (not shown) with a key 13, is used to secure lid 10 as well as drawer 12. When closed, lid 10 and the front panel 11 of drawer 12 (both of them being made of integrally moulded plastics) lie substantially on the same plane, exception made for a protruding handle 14 provided along the bottom side of lid 10 and for a handle 15 of drawer 12, also protruding. The gripping portion of drawer handle 15, positioned just above the front panel 11, is concealed (fig. 1). Notices and/or identification marks (not shown) concerning the media stored in the container, which are written for example in alphanumeric and/or Braille characters, can either be directly printed onto the visible surface of the same handle 15 or onto labels applied thereto. The curved and upwards angled shape (figs. 3 and 4) of the said visible surface makes the said notices and/or marks easily readable by an user of the computer.

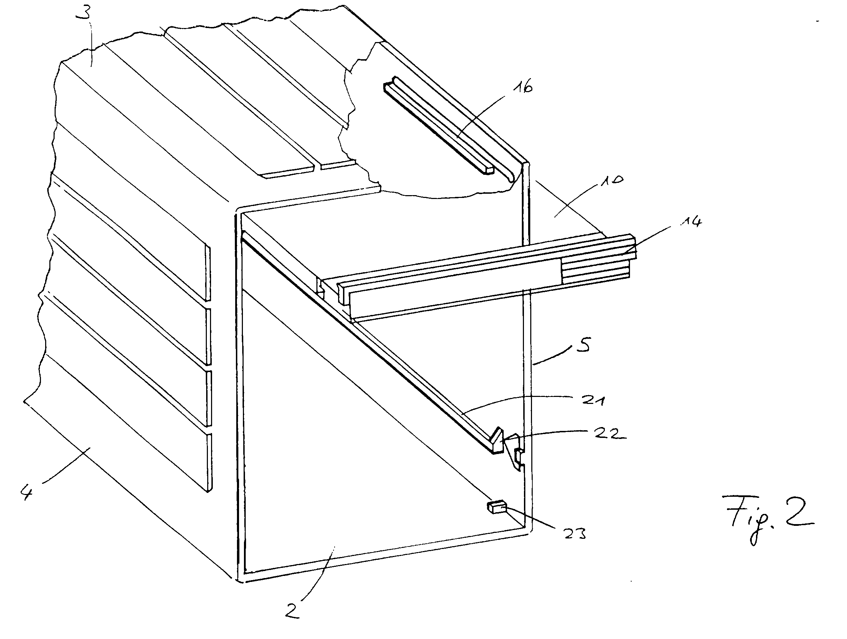

According to a feature of the invention, the lid 10 is not only tiltably mounted (as indicated by arrow F1 in fig. 1, where a sequence of the lid opening is shown) but also fully retractable into casing 1 (as indicated by arrow F2 in the same figure). When fully opened the lid 10, with the exception of handle 14, is entirely concealed under the upper face 3 of casing 1. This is due to the provision of a couple of hinging pins (not shown) at the ends of the lower side of lid 10. The pins are slidably mounted into associated longitudinal slideways internally provided in the upper portion of the left and right hand faces 4, 5 of casing 1 : one such slideway, designated by reference numeral 16, is shown in fig. 2. In this way, lid 10, though ensuring a partial frontal closure of casing 1, when retracted does not interfere with the drawer 12 while this is opened and closed.

According to another feature of the invention, the drawer 12 also includes a couple of edges 17 and 18 (figs. 3 and 4), which are quite low with respect to the height of casing 1. The edges 17 and 18 are externally provided with longitudinal ribs 19 resp. 20, which are suitable to slide into associated longitudinal slideways, internally provided in the lower portion of the left and right hand faces 4, 5 of casing 1, for opening and closing the drawer 12. One such slideways, designated by reference numeral 21, is shown in fig. 2. To avoid the open drawer 12 is accidentally pulled out of casing 1, a number of stops such as those designated by reference numerals 22, 23 are respectively provided at the front of the said slideways 21 and onto the inner surface of the lower face 2 of casing 1 (fig. 2). Drawer 12 is also integrally made as a single piece with two alternate series of projections, designated by reference numerals 24 respectively 25, which are transversally arranged on the drawer 12. Projections 24 of the first series are so high as the above mentioned edges 17, 18 and extended along the same; on the other hand, arc-shaped projections 25 of the second series thereof are lower than former projections 24 and also extended across drawer 12 (figs. 3 and 4).

According to still another feature of the invention, projections 24, 25 of drawer 12 are so designed as to permit the storage in the container of various types of computer media all together, in particular diskettes, ZIP IOMEGA and TRAVAN cassettes as well as compact disks within their jewel case.

According to still another feature of the invention, drawer 12 is also equipped with a number of removable partitions 26, supplied with the container, which are engageable among the projections 24, 25. Thanks to their peripheral receivers 27 and central coupler washers 28, each partition 26 can simultaneously hold a pair of compact disks 29 secured to its opposed surfaces (fig. 4). A partition 26 is also shaped in such a way that, quite conveniently, a portion 30 is protruding beyond the periphery of a supported disk 29, bearing a label and/or a similar mark to make easier the identification of the relevant disks by an user of the computer. Also the labels mentioned and/or identification marks can be in alphanumeric or Braille characters.

The advantages deriving from the use of the container of the invention are quite clear from the previous description : possibility of storage of many different types of computer media, all together; the protection of the media afforded by lid 10 and drawer 12 when closed; the modularity of the containers permitting to arrange vertical and/or horizontal arrays, which are compact and easy to move thanks to their physical stability; quick identification of the media stored in a container without unloading therefrom.

It is intended that the container of the invention could also be realized according to other different embodiments, also covered by this patent. In particular, instead of the projections 24, 25 integrally made as a single piece with drawer 12, other means, suitable to be supported by the drawer, for holding the various types of computer media could be provided in the container.

## Claims

1. A modular container intended for the storage of computer media including a generally parallelepiped casing **1** with a closure lid **10** and at least a drawer **12**, characterized in that :
- the lid **10**, as a separate part from the drawer **12**, is tiltable and retractable in such a way to be substantially enclosed into the casing **1**, when fully open;
- the lateral edges **17**,**18** of the drawer **12** are low with respect to the casing **1**;
- at least two alternate series **24**,**25** of means for holding simultaneously any type of computer media are formed with the lateral edges **17**,**18** of the drawer **12** or are suitable to be supported by the drawer **12**.

2. A modular container as in claim **1**, characterized in that the lid **10**, when closed, lies substantially on the same plane as the front panel **11** of the drawer **12** and is positioned above the drawer **12**.

3. A modular container as in claim **1** or **2**, characterized in that the lid **10** has hinging pins slidably mounted into a couple of associated slideways **16**, provided at the inner surfaces of two parallel faces **4**,**5** of the casing **1** in such a way to be open and closed without interfering with the drawer **12**.

4. A modular container as in claim **3**, characterized in that stopping means **22**,**23** of the drawer **12** are provided at the inner surfaces of various faces **2**,**4**,**5** of the casing **1** with the purpose of avoiding the drawer **12** is accidentally pulled out of the casing **1** when extracted.

5. A modular container as in claim **1**, characterized in that the drawer **12** is equipped with removable partitions **26**, engageable with the said series of holding means **24** and **25**, each of the partitions **26** being provided with means, like peripheral receivers **27** and central coupler washers **28**, to hold a pair of compact disks **29** secured to its opposed surfaces.

6. A modular container as in claim **5**, characterized in that each of the said partitions **26** has a portion **30** protruding beyond the periphery of a compact disk **29** supported therein and bearing a label and/or a similar mark, written for example in alphanumeric and/or Braille characters, to make easier the identification of the relevant disks **29**.

7. A modular container as any of the preceding claims, characterized in that the handle **15** of the drawer **12** is integrally made as a single piece with any other part **11**,**17**,**18**,**19**, **20**,**24**,**25** of the same drawer **12**.

8. A modular container as any of the preceding claims, characterized in that the lid **10** of casing **1** and the drawer **12** are secured, when closed, by a single latch operated by a key **13**.

9. A modular container as any of the preceding claims, characterized in that notices and/or identification marks concerning the computer media stored therein are directly provided and/or applied onto visible surfaces of the lid **10** and/or the drawer **12**, in particular of the arc-shaped and upwards angled handle **15** of the drawer **12**, the said notices and/or identification marks being written, for example, in alphanumeric and/or Braille characters.

10. A modular container as any of the preceding claims, characterized in that ribs **7**,**9** and mating grooves **8** are respectively provided lengthwise on outer surfaces of faces **2**,**3**,**4**,**5** of the casing **1** other than the face closable by lid **10** and the face parallel to the latter, with the purpose of permitting to form vertical arrays of several containers one above another, respectively horizontal arrays of several containers one along another, which are compact and easy to move thanks to their physical stability.
